# EUROPÄISCHE PATENTSCHRIFT

(11) **EP 1 688 460 B1**
(45) Veröffentlichungstag und Bekanntmachung des Hinweises auf die Patenterteilung: **17.03.2010**
(21) Anmeldenummer: 06100145.9
(22) Anmeldetag: 09.01.2006
(51) Int. Cl.: C08L 23/16, C08L 23/10

(54) **Verfahren zur Herstellung einer genarbten Folie und deren Verwendung**
Process for the preparation of an embossed film and its use
Procédé pour la preparation d'un film gauffré et son utilisation

(30) Priorität: 07.02.2005 DE 102005005576
(43) Veröffentlichungstag der Anmeldung: 09.08.2006
(73) Patentinhaber: Benecke-Kaliko AG, 30419 Hannover (DE)
(72) Erfinder: Bühring, Jürgen, 73033, Göppingen (DE); Hülsewede, Volker, 73037, Göppingen (DE)
(74) Vertreter: Finger, Karsten

(56) Entgegenhaltungen:
- WO-A-00/18994
- US-A1- 2002 121 730
- PATENT ABSTRACTS OF JAPAN Bd. 1999, Nr. 05, 31. Mai 1999 (1999-05-31) & JP 11 049866 A (TOKUYAMA CORP), 23. Februar 1999 (1999-02-23)
- PATENT ABSTRACTS OF JAPAN Bd. 016, Nr. 335 (M-1283), 21. Juli 1992 (1992-07-21) & JP 04 097844 A (TONEN CHEM CORP), 30. März 1992 (1992-03-30)

## Beschreibung

Die Erfindung betrifft ein Verfahren zur Herstellung einer genarbten Folie oder eines genarbten, mehrlagigen Folienlaminates mit einer Oberfolie und zumindest einer Unterfolie, wobei die Folie oder die Oberfolie des Folienlaminates auf einer Masse basieren, die Polyolefine und ggf. weitere Polymere und Additive enthält,
wobei die Folie oder das Folienlaminat nach einem die Narbstruktur bildenden Prägeschritt vernetzt wird. Ferner betrifft die Erfindung eine Folie oder ein Folienlaminat, welches nach dem Verfahren hergestellt wurde sowie eine Innenverkleidung, die eine solche Folie oder ein solches Folienlaminat aufweist.

Folien und Folienlaminate, die auf Polyolefinen basieren, werden in unterschiedlichsten Bereichen, z. B. der Verpackungsindustrie oder im Automobilbereich, eingesetzt. Für den Einsatz in den verschiedenen Bereichen, insbesondere im Bereich von Automobilinnenverkleidungen, werden die Folien oder Folienlaminate durch Tiefziehprozesse oder andere verformende Prozesse weiterverarbeitet, um die gewünschte Form, beispielsweise die Form einer Automobilinnenverkleidung, zu erhalten. An die Folien oder Folienlaminate werden hohe Anforderungen hinsichtlich ihrer chemischen und physikalischen Eigenschaften gestellt, so sollen sie z. B. gut verarbeit-, laminier- und prägbar sein und bei der Verarbeitung eine gute Narbstabilität aufweisen.

Ein Verfahren zur Herstellung von genarbten Folien gemäß dem Oberbegriff des Anspruchs 1 wird in der EP-A-1 149 858 beschrieben. Es werden Dekorfolien auf Polyolefinbasis für Anwendungen im Automobilinterieur offenbart, bei denen Kriterien wie Narbstabilität, Narbhomogenität nach dem Verformprozess, Haptik, Alterungsstabilität, Lichtechtheit, Emissionsarmut usw. von großer Bedeutung sind. Bei dem Verfahren zur Herstellung der Folie wird aus unvernetzten Polyolefinen und ggf. weiteren Additiven eine Folie hergestellt. Diese Folie wird geprägt und zum Erzielen einer für ein Tiefziehverfahren geeigneten Narbstabilität mit Elektronenstrahlen behandelt. Die behandelte Folie wird dann zu einem Formkörper mit genarbter Oberfläche tiefgezogen. In der EP-A-1 149 858 wird auch die Möglichkeit angesprochen, dass die für die Ausbildung der Folie verwendete Polyolefinmasse einen geringen Anteil (weniger als 10 %) an vorvernetzten Polymeren enthalten kann, was mit einem Gelgehalt der Folie von deutlich weniger als 3 Gew.-% einhergeht. Die Beispiele in der Schrift zeigen Folien, die vor dem Prägen und Elektronenbestrahlen einen Gelgehalt, der ein Maß für den Vernetzungsgrad des Polyolefins ist, von 0 bzw. 25 Gew.-% aufweisen. Folien mit anderen Gelgehalten werden nicht genannt. Die beschriebene Folie kann in unbestrahlter oder bestrahlter Form zu einem Verbundgebilde laminiert werden und zeichnet sich dadurch aus, dass sie nach dem Prägen mit Elektronenstrahlen wünschenswert vernetzt wird und daraus eine hohe Narbstabilität beim Tiefziehverfahren resultiert. Die bekannte mehrlagige Folie ist besonders für die Kraftfahrzeuginnenverkleidung von Bedeutung.

Im Bereich der Automobilzulieferindustrie ist der Trend festzustellen, im Rahmen effizienterer Prozesse für die Herstellung von Kraftfahrzeuginnenteilen auch so genannte Direktkaschierverfahren heranzuziehen. Unter Direktkaschierverfahren werden im Allgemeinen solche Verfahren verstanden, bei denen das Verkleidungsteil in einem Verfahrensschritt aus Dekorfolie und Trägermaterial ohne die Gegenwart eines Klebersystems hergestellt wird. Als Beispiele für diese Techniken können Presskaschierverfahren, das Strangablegeverfahren oder das Hinterspritzverfahren dienen. Derartige Verfahren werden unter anderem in der EP-A-0 968 806, der EP-B-0 730 947, der EP-B-0 650 828 sowie der DE-A-196 18 393 beschrieben.

Anders als bei dem standardmäßig für die Herstellung von dekorierten Innenraumteilen von Kraftfahrzeugen angewandten Tiefziehverfahren zeichnen sich einige Direktkaschierverfahren dadurch aus, dass im Rahmen des Verformungsschrittes gleichzeitig über der Folienrückseite das Trägerteil, welches z. B. aus einem thermoplastischen Polymer oder einer Polymermischung gebildet werden kann, erzeugt wird. Im üblichen Tiefziehverfahren wird der dreidimensional vorgeformte Träger in einem separaten Fertigungsschritt zunächst in der gewünschten Kontur entsprechend gepresst oder gespritzt. Dieser Träger wird anschließend mit einem Kleber beschichtet. Beim Tiefziehverfahren reagiert der Kleber mit einem auf der Folienrückseite aufgebrachten Haftlack.

Beim Direktkaschierverfahren wird das auf eine bestimmte Temperatur vorgewärmte Trägermaterial mit der Folie in das formgebende Werkzeug gegeben. Im Rahmen eines Pressschrittes wird der trägergestützte genarbte Formkörper erhalten, wobei sowohl die Dekorfolie als auch ggf. der Träger ihre gewünschte dreidimensionale Form erhalten. Man erspart sich somit häufig die separate Herstellung des Trägers sowie den Kleberauftrag. Auch ist die Folie rückseitig nicht mehr mit einem Haftlack zu versehen. Eine Besonderheit der Verformvorgänge nach dem Direktkaschier-Prinzip ist, dass die Dekorseite des zu verformenden Dekormaterials, anders als beim Tiefziehprozess, im Rahmen des endgültigen Formgebungsschrittes nicht zwingend separat erwärmt wird. Dies hat zur Folge, dass sich bei Verwendung üblicher Folienzusammensetzungen, wie sie für Tiefziehanwendungen eingesetzt werden, Probleme dahingehend ergeben können, dass bei den dekorseitig herrschenden niedrigen Verfahrenstemperaturen die Dekorfolien nach dem Verformprozess im Bereich höherer Verstreckungsgrade weiße oder graue Bereiche aufweisen, was als "Weißbruch" bezeichnet wird. Um das Fehlerbild des Weißbruchs zu umgehen, ist es üblich, dem Folienausgangsmaterial weiche Rezepturbestandteile beizugeben, was sich nachteilig auf die Wärmeformbeständigkeit, die Abriebresistenz und die Narbstabilität nach dem Verformen auswirken kann.

Um bei Dekorfolien ein angenehmes Griffempfinden oder eine gewünschte Berührhaptik zu generieren, wird die zu kaschierende Folie häufig rückseitig mit einer geschäumten Unterfolie versehen, wobei der Schaum gleichzeitig noch eine Schutzfunktion für die Dekorfolie gegenüber dem rückseitig auf die Folie gepressten Trägermaterial bietet. Als Schäume für die Folienlaminate finden primär Polyolefinschäume, basierend auf Polyethylen und/oder Polypropylen, Anwendung.

Die Folienlaminate, die bei den Direktkaschierverfahren eingesetzt werden, weisen in der Regel eine Oberfolie aus einer auf Polyolefinen basierenden Polymermasse und eine Unterfolie aus Polyolefinschaum auf, die in einem ersten Verfahrensschritt laminiert und gleichzeitig geprägt, das heißt mit einer Narbstruktur versehen werden, und im Anschluss zum Erzielen einer gewünschten Narbstabilität für spätere Verformungsschritte mit Elektronenstrahlen behandelt werden.

Es hat sich herausgestellt, dass bei den vorgenannten Verfahren zur Herstellung von genarbten Folien oder genarbten Folienlaminaten beim Prägen nicht immer optimale Ergebnisse erzielt werden. Es kann bei üblicher Prägewalzengeschwindigkeit dazu kommen, dass nach dem Verlassen der Prägewalze die durch den Kontakt mit der Prägewalze erzeugte Narbgebung durch die in weiteren Verfahren auftretenden Zugkräfte zu einem gewissen Teil wieder aus dem Material herausgezogen werden. Dem kann durch Herabsetzen der Prägegeschwindigkeit entgegengewirkt werden, dies führt jedoch zu einer ungewünschten Verteuerung des Herstellverfahrens.

Der Erfindung liegt daher die Aufgabe zugrunde, ein Verfahren zur Herstellung einer genarbten Folie oder eines genarbten Folienlaminates bereitzustellen, durch das Folien oder Folienlaminate erzeugt werden, die bei guter Narbstabilität und Radienabformung im Tiefzieh- oder Direktkaschierverfahren eine verbesserte Prägbarkeit aufweisen.

Gelöst wird die Aufgabe durch ein Verfahren der eingangs genannten Art dadurch, dass die Folie oder die Oberfolie vor dem Prägeschritt einen Gelgehalt von 3 bis 15 Gew.-%, gemessen nach 24-stündiger Extraktion in siedendem Xylol, durch einen Anteil an zumindest partiell vernetzten Polyolefinen aufweist, wobei die Zusammensetzung des Folie oder des Oberfolie folgende Bestandteile enthält
- 5 bis 50 Gew.-%, vorzugsweise 10 bis 40 Gew.-%, Polypropylen mit einem Schmelzpunkt > 120 °C,
- 5 bis 80 Gew.-%, vorzugsweise 10 bis 70 Gew.-%, eines Ethylencopolymers oder einer Mischung mehrerer Copolymere mit einem Schmelzpunkt von jeweils < 100 °C,
- 0 bis 50 Gew.-%, vorzugsweise 5 bis 30 Gew.-%, eines Polyethylens mit einer Dichte < 0,94 kg/L und einem MFI (190 °C, 2,16 kg) von weniger als 5 g/10 min
enthält.

Der Grundgedanke der Erfindung ist darin zu sehen, dass mit diesem speziellen, moderaten Gelgehalt der Folie bzw. der Oberfolie eine Stabilisierung der Schmelzviskosität unter Prägebedingungen erzielt werden kann. Beim Prägen entstehen auf diese Weise weder zu flache Narben, wie es bei Folien mit höherem Gelgehalt der Fall ist, noch wird die geprägte Narbung nach dem Kontakt mit der Prägewalze und vor der Weiterverarbeitung wieder aus dem Material herausgezogen, wie es bei Folien mit niedrigerem Gelgehalt der Fall ist. Es wird durch das Verfahren eine Folie bzw. ein Folienlaminat mit einer besseren Narbabbildung erhalten bzw. die Prägegeschwindigkeit kann erhöht werden, ohne dass das Narbbild im Vergleich zu bekannten Folien verschlechtert wird.

Besonders gute Prägbarkeit wird erzielt, wenn die Folie oder die Oberfolie vor dem Prägeschritt einen Gelgehalt von 3 bis 10 Gew.-%, gemessen nach 24-stündiger Extraktion in siedendem Xylol, aufweist.

Um ein gute Narbfestigkeit der Folie oder des Folienlaminates beim Tiefziehen oder weiteren Verformen zu erzielen, ist es von Vorteil, wenn die Folie oder die Oberfolie nach dem die Narbstruktur bildenden Prägeschritt und der Vernetzung einen Gelgehalt von 15 bis 65 Gew.- %, vorzugsweise 25 bis 50 Gew.-%, gemessen nach 24-stündiger Extraktion in siedendem Xylol, aufweist. Folien mit einem derartigen Gelgehalt lassen sich tiefziehen und/oder andersartig verformen, ohne dass die Narbstruktur dabei wesentlich verändert oder beeinträchtigt wird.

Vorzugsweise sind die Polyolefine für die die Folie oder die Oberfolie bildende Masse durch einen Schmelzflußindex MFI (230 °C, 2,16 kg) von etwa 0,1 bis 800 g/10 min, insbesondere etwa 0,1 bis 200 g/10 min, besonders bevorzugt etwa 0,1 bis 20 g/10 min, charakterisiert.

Neben den Polymerbestandteilen enthält die zur Folienherstellung eingesetzte Masse vorzugsweise eine Reihe von Hilfsmitteln, wie Vernetzungshilfsmittel, Antioxidationsmittel, Lichtschutzmittel, Pigmente, Gleitmittel und/oder Alterungsschutzmittel.

Um z. B. einen ausreichenden Vernetzungsgrad bei der Vernetzung nach dem Prägeschritt zu erzielen, wird vorzugsweise ein Vernetzungshilfsmittel zugesetzt. Dies gilt insbesondere für Polyolefine, bei denen die Kettenspaltung, die als Konkurrenzreaktion zur Vernetzung abläuft, eine merkliche Auswirkung zeigt. Betroffen sind insbesondere Poyolefine, mit tertiären und quartären C-Atomen. Verwendung als Vernetzungshilfsmittel finden insbesondere ein- oder mehrfach ungesättigte Verbindungen, wie Acrylate von ein- oder mehrwertigen Alkoholen, so z. B. Trimethylolpropantriacrylat, Methacrylate von ein- oder mehrwertigen Alkoholen, so z. B. Trimethylolpropantrimethacrylat, vinylfunktionelle Komponenten, wie Styrol und Divinylbenzol, Allyl-Verbindungen, wie, Triallylisocyanat, p-Chinondioxim, p,p'-Dibenzoylchinondioxim, N-Methyl-N,4-dinitrosoanilin, Nitrobenzol, Diphenylguanidin, Trimethylolpropan-N,N'-m-phenylendimaleimid. Besonders gute Ergebnisse werden bei Verwendung von Trimethylolpropantriacrylat, Trimethylolpropantrimethacrylat, Triallylcyanurat, Divinylbenzol, Ethylenglycoldimethacrylat, Diethylenglycoldimethacrylat und/oder Polyethylenglycoldimethacrylat erzielt. Dabei hat es sich als vorteilhaft erwiesen, wenn die Vernetzungsmittel in Mengen von bis zu etwa 20 Gew.-%, bevorzugt bis zu etwa 10 Gew.-% und besonders bevorzugt bis zu etwa 5 Gew.-%, bezogen auf den Gehalt der Masse an unvernetzten Polyolefinen, einsetzt werden.

Als besonders vorteilhaft hat es sich erwiesen, als Antioxidantien Phenolderivate, Lactone und/oder Phosphite und als Lichtschutzmittel sterisch gehinderte Amine oder Benzotriazine in einer Menge von weniger als etwa 5 Gew.-%, vorzugsweise bis zu 3,5 Gew.-%, insbesondere von 0,2 bis 2,5 Gew.-%, bezogen auf das Gewicht der Masse, einzusetzen.

Bei der in dem Folienlaminat vorliegenden Unterfolie kann es sich um ein Vlies handeln, bevorzugt wird jedoch ein Kompaktfolie oder ein geschäumtes Polymermaterial eingesetzt, wobei das geschäumte Polymermaterial eine Dichte zwischen 35 und 120 g/L und einen Gelgehaltes, gemessen nach 24-stündiger Extraktion in siedendem Xylol, von weniger als 80 Gew.-%, insbesondere zwischen 30 und 70 Gew.-% aufweist. Vorzugsweise ist die Unterfolie aus einem Polyolefinschaum auf der Basis von Polyethylen und/oder Polypropylen aufgebaut.

Die Herstellung und Prägung der Folie oder des Folienlaminates erfolgt nach dem Fachmann bekannten Verfahren, wie z. B. Extrusions- und Kalandrierverfahren. Durch den moderaten Gelgehalt der Folie lässt sie sich gut durch Prägewalzen prägen und die Geschwindigkeit der Prägewalzen kann hoch gewählt werden.

Im Anschluss an die Prägung erfolgt eine weitergehende Vernetzung des Materials für eine hohe Narbfestigkeit beim Tiefziehen und/oder Verformen. Die nach dem die Narbstruktur bildenden Prägeschritt erfolgende weitere Vernetzung kann auf chemischem Weg oder physikalisch erfolgen.

Bei der physikalischen Vernetzung hat es sich als vorteilhaft erwiesen, wenn die weitere Vernetzung durch Elektronenstrahlen erfolgt. Dabei wird bei Kompaktfolien bevorzugt mit einer Bestrahlungsdosis von 10 bis 300 kGy, insbesondere 30 bis 150 kGy, bei Folienlaminaten mit einer Bestrahlungsdosis von 20 bis 150 kGy, insbesondere 30 bis 100 kGy, bestrahlt.

Handelt es sich bei dem nach dem erfindungsgemäßen Verfahren hergestellten Gegenstand um eine Folie, zeichnet sich diese durch eine besonders gute Prägbarkeit bei guter Narbabbildung aus. Die Folie kann während des und/oder vor dem und/oder nach dem die Narbstruktur bildenden Prägeschritt und/oder nach der Vernetzung zu einem Verbundgebilde laminiert und/oder beschichtet, z. B. mit einem PUR-Lack, und im Anschluss an die weitergehende Vernetzung zu einem mehrlagigen, genarbten Formkörper, beispielsweise einer Innenverkleidung eines Kraftfahrzeuges, tiefgezogen werden.

Handelt es sich bei dem nach dem erfindungsgemäßen Verfahren hergestellten Gegenstand um ein Folienlaminat mit einer Oberfolie und zumindest einer Unterfolie, so zeichnet sich auch dieses Laminat durch eine hervorragende Prägbarkeit bei guter Narbabbildung aus. Nach dem Prägen und der weitergehenden Vernetzung, z. B. durch Elektronenstrahlen, kann das Folienlaminat zu einem mehrlagigen, genarbten Formkörper verformt werden, z. B. in einem Tiefziehprozess. Der mehrlagige Formkörper kann mit einem Träger, z. B. aus ABS oder Naturfasern, versehen werden, dabei ist es von Vorteil, wenn der Träger bei der Herstellung des genarbten, mehrlagigen Formkörpers direkt beim Tiefziehprozess mit dem genarbten, mehrlagigen Folienlaminat verbunden wird. Die Verbindung von Träger und Unterfolie kann dabei über ein Klebersystem erfolgen.

Es ist aber auch möglich, dass die zur Herstellung des genarbten, mehrlagigen Formkörpers aus dem Folienlaminat in einem einzigen Verfahrensgang und unter weitgehendem Ausschluss eines Vakuums, insbesondere unter weitgehendem Ausschluss eines Klebersystems, ein trägergestützter genarbter, mehrlagiger Formkörper dadurch gebildet wird, dass a) ein in seiner räumlichen Struktur vorgefertigter Träger oberflächlich erwärmt und auf die rückseitig erwärmte Seite des vernetzten, genarbten, mehrlagigen Folienlaminates gepresst wird oder b) ein sich in plastischem Zustand befindendes Ausgangsmaterial des Trägers in einem Werkzeug mit der Rückseite des vernetzten, genarbten, mehrlagigen Folienlaminats verbunden wird.

Die nach dem erfindungsgemäßen Verfahren hergestellten Folien oder Folienlaminate sowie die daraus erzeugten Formkörper zeigen zahlreiche Vorteile. Aufgrund der guten Prägbarkeit und Narbabbildung lassen sich die Folien oder Folienlaminate sehr gut herstellen und die Prägegeschwindigkeit kann, ohne Einbußen in der geprägten Struktur erleiden zu müssen, erhöht werden, was mit einer Effizienzsteigerung des Herstellungsprozesses verbunden ist. Die nach dem erfindungsgemäßen Verfahren hergestellten und zu Formkörpern umgebildeten Folien oder Folienlaminate eignen sich besonders als Innenverkleidung von Kraftfahrzeugen, z. B. als Armaturenverkleidung, wobei ein stabiles sauberes Narbbild von hoher Wichtigkeit ist. Bedingt durch die lange Gebrauchsdauer von Kraftfahrzeugen sind gerade Innenverkleidungen von Kraftfahrzeugen hohen Beanspruchungen ausgesetzt. Einem stabilen sauberen Narbbild kommt dabei für den Qualitätseindruck der Kraftfahrzeuginnenverkleidung eine besondere Bedeutung zu. Bei dem erfindungsgemäßen Verfahren wird eine Störung der Homogenität des Narbbildes weitestgehend ausgeschlossen. Man erhält ein prägnantes Narbbild, und ein unerwünschtes Aufglänzen der Oberfläche wird verhindert.

Die Erfindung wird nun anhand von Ausführungsbeispielen näher erläutert. Dazu wurden tiefgezogene, genarbte Formkörper gemäß folgender Beschreibung hergestellt:

Die in der folgenden Tabelle 1 formulierten Zusammensetzungen mit den Mengen der Substanzen in Gewichtsteilen wurden auf einem Zweischneckenextruder (ZSK 25 L/D 28) zu Folien der Dicke 0,5 mm extrudiert. Die Zylinder- und Düsentemperaturen wurden gem. den Angaben der Tabelle 2 eingestellt.

**Tabelle 1: Folienzusammensetzungen**

| | Vergleichsbeispiel 1 | Vergleichsbeispiel 2 | Beispiel 1 | Beispiel 2 | Beispiel 3 |
|---|---|---|---|---|---|
| | | | | | |
| TPE-V 1 | 60 | | 20 | 30 | 25 |
| r-PP | 20 | | | | |
| LLDPE | | | | | |
| VLDPE | 20 | | | | 10 |
| EPDM | | 30 | 20 | 20 | |
| Pigment | 1 | 1 | 1 | 1 | 1 |
| Covernetzer | | 2 | 2 | 2 | 2 |
| TPO | | 70 | 60 | 50 | 65 |

TPE-V 1: Thermoplastisches Elastomer bestehend aus 35% Polypropylen und 65% eines Copolymeren aus Ethylen und Propylen, Shorehärte A 82, MFI 15g/10min (230°C, 10 kg), Gelgehalt 28%
r-PP: Random copolymeres Polypropylen, Dichte 0,90 g/ml, MFI 1g/10min (230°C, 2,16 kg)
LLDPE: Linear low density Polyethylen, Dichte 0,92 g/ml, MFI 1g/10 min (190°C, 2,16 kg)
VLDPE: Very low density Polyethylen Dichte 0,87 g/ml, MFI 1g/10 min (190°C, 2,16 kg)
EPDM: Ethylen-Propylen-Dien-Mischpolymer, Dichte 0,89 g/ml, Diengehalt ca. 1 Gew.%
Pigment: Ruß
Covernetzer: Triallylcyanurat
TPO: Thermoplastisches Elastomer (unvernetzt) bestehend aus 35% Polypropylen und 65% eines Copolymeren aus Ethylen und Propylen, Dichte 0,89 g/ml, MFI 1g/10min (230°C, 2,16 kg)

**Tabelle 2: Zylinder- und Düsentemperaturen in °C bei der Folienextrusion**

| | Zone 1 | Zone 2 | Zone 3 | Zone 4 | Zone 5 | Zone 6 |
|---|---|---|---|---|---|---|
| Zylinder | 180 | 175 | 180 | 195 | 205 | --- |
| Düse | 210 | 210 | 210 | 210 | 210 | 210 |

Anschließend wurden die Folien mit einem ca. 10 µm starken PUR-Lack beschichtet und danach im Rahmen eines kontinuierlichen Prägevorgangs bei einem Liniendruck von 35 bar, einer Prägetemperatur von 175°C und bei Vorheizwalzentemperaturen von 125°C zusammen mit einer weiteren ebenfalls 0,5 mm dicken Folie gleicher Zusammensetzung im Prägespalt zeitgleich laminiert und geprägt.

Die Prägegeschwindigkeit zum Erreichen desselben visuell beurteilten Narbausfalls wie das Vergleichsbeispiel 1 wurde mittels eines Tachometers ermittelt.

Die erhaltenen Muster wurden, abgesehen von den Vergleichsbeispiel 1, anschließend mit den in Tabelle 3 beschriebenen Bestrahlungsdosen in einem Elektronenstrahlvernetzer bestrahlt.

**Tabelle 3: Vernetzungsdosen**

| | Vergleichsbeispiel 1 | Vergleichsbeispiel 2 | Beispiel 1 | Beispiel 2 | Beispiel 3 |
|---|---|---|---|---|---|
| Dosis [kGy] | 0 | 75 | 75 | 75 | 75 |

Die so erhaltenen Folienlaminate wurden in eine Tiefziehmaschine eingelegt und bei den in Tabelle 4 genannten Temperaturen über eine kleine Dachform tiefgezogen. Beurteilt wurden an dem erhaltenen Formkörper der Glanz und das erhaltene Narbbild. In der Tabelle 4 sind weiterhin die Prägegeschwindigkeiten und die Gelgehalte der Folien eingetragen.
Die Bestimmung des Gelgehaltes erfolgte dabei nach folgendem Verfahren:
Die Gelgehalte wurden nach der Extraktionsmethode erhalten. Die Proben wurden bei einer Dicke von ca. 0,5 mm in Quadrate einer Kantenlänge von ca. 1,0 mm geschnitten.
Die Proben (ca. 100 mg) wurden dann in Reagenzgläsern vorgelegt, welche mit Pfropfen aus rostfreiem Stahldraht versehen sind, die ein Aufschwimmen der Proben verhindern.
Die Reagenzgläser werden mit 100 ml Xylol gefüllt und mit Alufolie verschlossen um ein Abdampfen des Lösemittels zu verhindern. Das Xylol wurde dann zum Sieden erhitzt. Die Probekörper ließ man ca. 24h im siedenden Xylol. Anschließend wurde das Gel-XylolGemisch über eine Siebtrommel mit einer Maschenweite von 200 mesh filtriert, wobei das Gel in der Siebtrommel verblieb. Die Siebtrommeln wurden auf Metallplatten gestellt und bei 140 °C für 3 h im Umluftofen getrocknet. Nach dem Abkühlen auf Raumtemperatur wurde der Gehalt ausgewogen und zur Einwaage ins Verhältnis gesetzt.

**Tabelle 4: Prüfresultate**

| | Vergleichsbeispiel 1 | Vergleichsbeispiel 2 | Beispiel 1 | Beispiel 2 | Beispiel 3 |
|---|---|---|---|---|---|
| | | | | | |
| Prägegeschwindigkeit [m/min] | 7 | 3 | 7 | 8 | 7 |
| Gelgehalt der Folie zum Zeitpunkt des Prägeschrittes | 18 % | <3 % | 5 % | 9 % | 8 % |
| Gelgehalt der Folie zum Zeitpunkt des Tiefziehens | 18 % | 42 % | 35 % | 40 % | 30 % |
| Tiefziehen Tᵥₒᵣ = 170°C, T _{rück} = 180°C | Narbverflachung, Aufglänzen | prägnante Narbe, kein Aufglänzen | prägnante Narbe, kein Aufglänzen | prägnante Narbe, kein Aufglänzen | prägnante Narbe, kein Aufglänzen |

Vergleichsbeispiele und die erfindungsgemäßen Beispiele werden im Folgenden näher erläutert:
Vergleichsbeispiel 1 beschreibt eine mehrlagige, geprägte Folie mit einem Anteil
vernetzten Materials. Die Folie wurde nach dem Prägen nicht zusätzlich vernetzt. Diese
Folie zeigte gute Prägeeigenschaften. Allerdings reicht die Narbstandfestigkeit nach dem Tiefziehen nicht aus, um den Anforderungen nach matten, narbstabilen Oberflächen für das Automobilinterieur gerecht zu werden.
Wichtig bei der Beurteilung des Vergleichsbeispiels ist, das trotz des erhöhten Gelgehaltes keine ausreichende Narbstabilität vorhanden ist. Grund dafür ist, dass für die gute Narbstabilität eine Fixierung der einmal eingebrachten Narbe nach dem Prägevorgang entscheidend ist. Dies geschieht nur mit einer nachträglichen Vernetzung.

Vergleichsbeispiel 2 zeigt eine mehrlagige, geprägte Folie ohne einen Anteil von vernetztem Material vor dem Prägeschritt. Die Folie muss zum Erhalt des gewünschten Prägeausfalls mit sehr niedriger Geschwindigkeit geprägt werden. Nach dem anschließenden Vernetzungsschritt bleibt die einmal eingebrachte Narbstruktur auch nach dem Tiefziehen gut erhalten und die Oberfläche wie gewünscht matt.

Die erfindungsgemäßen Beispiele 1 bis 3 kombinieren sehr gute Prägeeigenschaften mit sehr guten Tiefzieheigenschaften, sofern die geprägte Folie anschließend vernetzt wird. Zum Zeitpunkt des Prägeschrittes weisen die Folien einen Gelgehalt von mehr als 3 und weniger als 20 Gew.-% auf, wohingegen der Gelgehalt zum Zeitpunkt des Tiefziehens durch eine nachträgliche Vernetzung mehr als 15 Gew.-% beträgt. Nur durch die spezielle Kombination von einem gewissen Gelgehalt vor der Prägung und einer Vernetzung nach dem Prägeschritt werden trotz hoher Prägegeschwindigkeit Formkörper erhalten, die sich durch eine prägnante Narbung bei gewünschter matter Oberfläche auszeichnen.

## Patentansprüche

1. Verfahren zur Herstellung einer genarbten Folie oder eines genarbten, mehrlagigen Folienlaminates mit einer Oberfolie und zumindest einer Unterfolie,
wobei die Folie oder die Oberfolie des Folienlaminates auf einer Masse basieren, die Polyolefine und ggf. weitere Polymere und Additive enthält,
wobei die Folie oder das Folienlaminat nach einem die Narbstruktur bildenden Prägeschritt vernetzt wird,
**dadurch gekennzeichnet, dass**
die Folie oder die Oberfolie vor dem Prägeschritt einen Gelgehalt von 3 bis 15 Gew.%, gemessen nach 24-stündiger Extraktion in siedendem Xylol, durch einen Anteil an zumindest partiell vernetzten Polyolefinen aufweist, wobei die Zusammensetzung der Folie oder der Oberfolie folgende Bestandteile enthält:
- 5 bis 50 Gew.% Polypropylen mit einem Schmelzpunkt > 120 °C,
- 5 bis 80 Gew.% eines Ethylencopolymers oder einer Mischung mehrerer Copolymere mit einem Schmelzpunkt von jeweils < 100°C,
- 0 bis 50 Gew.% eines Polyethylens mit einer Dichte < 0,94 kg/L und einem MFI (190 °C, 2,16 kg) von weniger als 5 g/10 min.

2. Verfahren nach Anspruch 1, **dadurch gekennzeichnet, dass** die Folie oder die Oberfolie vor dem Prägeschritt einen Gelgehalt von 3 bis 10 Gew.%, gemessen nach 24-stündiger Extraktion in siedendem Xylol, aufweist.

3. Verfahren nach Anspruch 1 oder 2, **dadurch gekennzeichnet, dass** die Folie oder die Oberfolie nach dem die Narbstruktur bildenden Prägeschritt und der Vernetzung einen Gelgehalt von 15 bis 65 Gew.- %, vorzugsweise 25 bis 50 Gew.%, gemessen nach 24-stündiger Extraktion in siedendem Xylol, aufweist.

4. Verfahren nach einem der Ansprüche 1 bis 3, **dadurch gekennzeichnet, dass** die Folie oder die Oberfolie aus einer Zusammensetzung gebildet ist, die
- 10 bis 40 Gew.% Polypropylen mit einem Schmelzpunkt > 120 °C,
- 10 bis 70 Gew.% eines Ethylencopolymers oder einer Mischung mehrerer Copolymere mit einem Schmelzpunkt von jeweils < 100 °C,
- 5 bis 30 Gew.-% eines Polyethylens mit einer Dichte < 0,94 kg/L und einem MFI (190 °C, 2,16 kg) von weniger als 5 g/10 min
enthält.

5. Verfahren nach zumindest einem der Ansprüche 1 bis 4, **dadurch gekennzeichnet, dass** die Folie oder das Folienlaminat nach dem die Narbstruktur bildenden Prägeschritt physikalisch vernetzt wird.

6. Verfahren nach Anspruch 5, **dadurch gekennzeichnet, dass** die Folie oder das Folienlaminat nach dem die Narbstruktur bildenden Prägeschritt durch Elektronenstrahlen vernetzt wird.

7. Verfahren nach zumindest einem der Ansprüche 1 bis 4, **dadurch gekennzeichnet, dass** die Folie oder das Folienlaminat nach dem die Narbstruktur bildenden Prägeschritt chemisch vernetzt wird.

8. Verfahren nach zumindest einem der vorhergehenden Ansprüche, **dadurch gekennzeichnet, dass** die Folie während des und/oder vor dem und/oder nach dem die Narbstruktur bildenden Prägeschritt und/oder nach der Vernetzung zu einem Verbundgebilde laminiert und/oder beschichtet und anschließend zu einem mehrlagigen, genarbten Formkörper tiefgezogen wird.

9. Verfahren nach zumindest einem der Ansprüche 1 bis 7, **dadurch gekennzeichnet, dass** das Folienlaminat zu einem mehrlagigen, genarbten Formkörper ggf. mit einem Träger verarbeitet wird.

10. Folie oder Folienlaminat, **dadurch gekennzeichnet, dass** sie oder es nach einem Verfahren gemäß einem der Ansprüche 1 bis 9 hergestellt ist.

11. Innenverkleidung eines Kraftfahrzeuges, aufweisend eine Folie oder ein Folienlaminat nach Anspruch 10.

## Claims

1. Process for the production of a grained foil or of a grained multilayer foil laminate with an upper foil and at least one lower foil,
where the foil or the upper foil of the foil laminate is/are based on a composition which comprises polyolefins and which optionally comprises further polymers and additives,
where the foil or the foil laminate is crosslinked after an embossing step that forms the grain structure,
**characterized in that**, by virtue of content of at least partially crosslinked polyolefins, the gel content of the foil or the upper foil prior to the embossing step is from 3 to 15% by weight, measured after 24 hours of extraction in boiling xylene, where the constitution of the foil or of the upper foil comprises the following constituents:
- from 5 to 50% by weight of polypropylene with melting point > 120°C
- from 5 to 80% by weight of an ethylene copolymer or of a mixture of a plurality of copolymers with melting point in each case < 100°C,
- from 0 to 50% by weight of a polyethylene with density < 0.94 kg/L and with MFI (190°C, 2.16 kg) less than 5 g/10 min.

2. Process according to Claim 1, **characterized in that** the gel content of the foil or the upper foil is from 3 to 10% by weight, measured after 24 hours of extraction in boiling xylene.

3. Process according to Claim 1 or 2, **characterized in that** the gel content of the foil or the upper foil after the embossing step forms the grain structure and after the crosslinking process is from 15 to 65% by weight, preferably from 25 to 50% by weight, measured after 24 hours of extraction in boiling xylene.

4. Process according to any of Claims 1 to 3, **characterized in that** the foil or the upper foil has been formed from a constitution which comprises
- from 10 to 40% by weight of polypropylene with melting point > 120°C,
- from 10 to 70% by weight of an ethylene copolymer or of a mixture of a plurality of copolymers with melting point in each case < 100°C,
- from 5 to 30% by weight of a polyethylene with density < 0.94 kg/L and with MFI (190°C, 2.16 kg) less than 5 g/10 min.

5. Process according to at least one of Claims 1 to 4, **characterized in that**, after the embossing step that forms the grain structure, the foil or the foil laminate is physically crosslinked.

6. Process according to Claim 5, **characterized in that**, after the embossing step that forms the grain structure, the foil or the foil laminate is crosslinked via electron beams.

7. Process according to at least one of Claims 1 to 4, **characterized in that**, after the embossing step that forms the grain structure, the foil or the foil laminate is chemically crosslinked.

8. Process according to at least one of the preceding claims, **characterized in that**, during the and/or prior to the and/or after the embossing step that forms the grain structure, and/or after the crosslinking process, the foil is laminated to give a composite structure and/or is coated, and is then thermoformed to give a multilayer, grained moulding.

9. Process according to at least one of Claims 1 to 7, **characterized in that** the foil laminate is processed to give a multilayer grained moulding if appropriate with a backing.

10. Foil or foil laminate, **characterized in that** it has been produced by a process according to any of Claims 1 to 9.

11. Interior cladding of a motor vehicle, comprising a foil or a foil laminate according to Claim 10.

## Revendications

1. Procédé de fabrication d'une feuille chagrinée ou d'un stratifié de feuilles multicouche chagriné muni d'une feuille supérieure et d'au moins une feuille inférieure, la feuille ou la feuille supérieure du stratifié de feuilles étant à base d'un matériau qui contient des polyoléfines et éventuellement des additifs et des polymères supplémentaires, la feuille ou le stratifié de feuilles étant réticulé après une étape de gaufrage qui forme la structure chagrinée,
**caractérisé en ce que**
la feuille ou la feuille supérieure présente avant l'étape de gaufrage une teneur en gel de 3 à 15 % en poids, mesurée après une extraction de 24 heures dans du xylène en ébullition, au moyen d'une fraction de polyoléfines au moins partiellement réticulées, la composition de la feuille ou de la feuille supérieure contenant les constituants suivants :
- 5 à 50 % en poids de polypropylène d'un point de fusion > 120 °C,
- 5 à 80 % en poids d'un copolymère d'éthylène ou d'un mélange de plusieurs copolymères d'un point de fusion à chaque fois < 100 °C,
- 0 à 50 % en poids d'un polyéthylène d'une densité < 0,94 kg/L et d'un MFI (190 °C, 2,16 kg) inférieur à 5 g/10 min.

2. Procédé selon la revendication 1, **caractérisé en ce que** la feuille ou la feuille supérieure présente avant l'étape de gaufrage une teneur en gel de 3 à 10 % en poids, mesurée après une extraction de 24 heures dans du xylène en ébullition.

3. Procédé selon la revendication 1 ou 2, **caractérisé en ce que** la feuille ou la feuille supérieure présente, après l'étape de gaufrage qui forme la structure chagrinée et la réticulation, une teneur en gel de 15 à 65 % en poids, de préférence de 25 à 50 % en poids, mesurée après une extraction de 24 heures dans du xylène en ébullition.

4. Procédé selon l'une quelconque des revendications 1 à 3, **caractérisé en ce que** la feuille ou la feuille supérieure est formée à partir d'une composition qui contient
- 10 à 40 % en poids de polypropylène d'un point de fusion > 120 °C,
- 10 à 70 % en poids d'un copolymère d'éthylène ou d'un mélange de plusieurs copolymères d'un point de fusion à chaque fois < 100 °C,
- 5 à 30 % en poids d'un polyéthylène d'une densité < 0,94 kg/L et d'un MFI (190 °C, 2,16 kg) inférieur à 5 g/10 min.

5. Procédé selon au moins l'une quelconque des revendications 1 à 4, **caractérisé en ce que** la feuille ou le stratifié de feuilles est réticulé physiquement après l'étape de gaufrage qui forme la structure chagrinée.

6. Procédé selon la revendication 5, **caractérisé en ce que** la feuille ou le stratifié de feuilles est réticulé par rayonnements d'électrons après l'étape de gaufrage qui forme la structure chagrinée.

7. Procédé selon au moins l'une quelconque des revendications 1 à 4, **caractérisé en ce que** la feuille ou le stratifié de feuilles est réticulé chimiquement après l'étape de gaufrage qui forme la structure chagrinée.

8. Procédé selon au moins l'une quelconque des revendications précédentes, **caractérisé en ce que** pendant et/ou avant et/ou après l'étape de gaufrage qui forme la structure chagrinée et/ou après la réticulation, la feuille est stratifiée et/ou enduite pour former une structure composite, puis emboutie pour former un corps moulé multicouche chagriné.

9. Procédé selon au moins l'une quelconque des revendications 1 à 7, **caractérisé en ce que** le stratifié de feuilles est usiné pour former un corps moulé multicouche chagriné, éventuellement avec un support.

10. Feuille ou stratifié de feuilles, **caractérisé en ce qu'**il ou elle est fabriqué par un procédé selon l'une quelconque des revendications 1 à 9.

11. Revêtement interne d'une automobile, comportant une feuille ou un stratifié de feuilles selon la revendication 10.
